Europäisches Patentamt

European Patent Office

Office européen des brevets

(19)

(11) Numéro de publication: **0 157 671**
**A1**

## (12) DEMANDE DE BREVET EUROPEEN

(21) Numéro de dépôt: 85400410.8

(22) Date de dépôt: 04.03.85

(51) Int. Cl.⁴: **G 06 F 11/16**, G 07 F 7/10, G 06 K 5/00

(30) Priorité: 02.03.84 FR 8403288

(43) Date de publication de la demande: 09.10.85 Bulletin 85/41

(84) Etats contractants désignés: **AT BE CH DE GB IT LI LU NL SE**

(71) Demandeur: **SOCIETE FRANCAISE DE SYSTEMES TERMINAUX SFST, Société Anonyme, 37, rue Vauvenargues, F-75018 Paris (FR)**

(72) Inventeur: **Bruant, Yves, 4, Square de Normandie, F-77420 Noisiel (FR)**

(74) Mandataire: **Rataboul, Michel, Cabinet Michel Rataboul 69, rue de Richelieu, F-75002 Paris (FR)**

(54) **Procédé et installation pour assurer la sécurité d'un processus électronique incluant l'affichage ou l'impression de données.**

(57) L'invention concerne les installations électroniques utilisant des calculateurs auxquels ont accès des utilisateurs non obligatoirement qualifiés et qui appartiennent à des organismes considérés comme des tiers par rapport auxdits usagers. C'est le cas, notamment, des distributeurs de billets de banque ou des appareils prévus pour la distribution automatique et sans surveillance de denrées telles que des carburants pour véhicules.

Dans ces cas, il est important que l'on puisse s'assurer qu'il y a concordance entre les informations fournies à l'usager et celles prises en compte par le propriétaire du calculateur, afin d'éviter toute contestation qu'il serait très difficile de trancher puisque les seuls éléments objectifs seraient directement dépendants de l'installation elle-même.

Conformément à l'invention, ce problème est réglé en prévoyant une comparaison entre les données mises en mémoire par le calculateur et celles qui sont fournies en clair à l'usager soit par émission d'un ticket imprimé, soit par affichage.

Pour cela, on transfère les données à présenter en clair à un ensemble de commande 4 de la présentation en clair et, simultanément, on les conserve dans une mémoire 11 du calculateur 3 tandis que, par ailleurs, on observe par des moyens optiques 7 ces données fournies en clair et on les traduit en informations codées pour les introduire dans le calculateur 3 afin de procéder à une comparaison. Selon le résultat de cette comparaison, le calculateur agit sur le processus, le cas échéant pour l'interrompre et informer l'usager.

ACTORUM AG

## PROCEDE ET INSTALLATION POUR ASSURER
## LA SECURITE D'UN PROCESSUS ELECTRONIQUE
## INCLUANT L'AFFICHAGE OU L'IMPRESSION DE DONNEES

L'utilisation d'installations électroniques tend à se généraliser et l'on effectue couramment des transactions financières, notamment pour retirer des billets de banque au moyen d'une carte magnétique, pour payer certains achats, etc.

Les erreurs entre des données introduites dans une installation électronique et celles qui sont finalement prises en compte sont extrêmement rares mais ne sont pas totalement à exclure et elles sont d'autant plus difficiles à détecter et à prouver qu'elles résultent, précisément, d'une installation entièrement automatique et, pourrait-on dire, irresponsable.

Pour protéger les utilisateurs d'installations électroniques et pour éviter toute contestation entre ceux-ci et les organismes propriétaires de ces installations, on a déjà imaginé des dispositifs permettant de vérifier la cohérence entre des données fournies à un calculateur et celles que ce dernier prend effectivement en compte. C'est, par exemple, le cas des transactions qui supposent d'une part la commande du calculateur par l'utilisateur et d'autre part l'émission par le calculateur d'un document écrit et devant, ensuite, faire foi de la transaction commandée par lui.

Or, il peut se faire qu'il y ait concordance entre la commande du calculateur et les informations fournies par le document écrit alors que le calculateur a pris en compte des données différentes, lesquelles seront celles dont le propriétaire de l'installation fera usage, ou qu'il y aura discordance entre les indications portées sur le document écrit et les données introduites en commande et prises en compte par le propriétaire du calculateur.

Il y aura alors discordance entre les mentions du document écrit et les données retenues par le propriétaire de l'installation.

La présente invention apporte une solution particulièrement performante au problème de la vérification de la cohérence entre les données fournies à l'utilisateur et celles fournies au propriétaire de l'installation.

.../...

- 2 -   0157671

A cette fin, l'invention a pour objet un procédé pour assurer la sécurité d'un processus qui met en oeuvre des dispositifs électroniques en s'assurant de la cohérence voulue entre des données introduites dans un calculateur et des données issues dudit calculateur et présentées en clair soit par affichage, soit par impression, caractérisé en ce que d'une part on transfère les données à présenter en clair à un ensemble de commande de la présentation en clair et que simultanément on les conserve dans une mémoire du calculateur et en ce que, d'autre part, on observe par des moyens optiques les données effectivement présentées en clair, que l'on traduit celles-ci en informations codées et que l'on transfère ces dernières au calculateur que l'on a programmé pour effectuer une comparaison entre les données à présenter en clair conservées en mémoire et les données présentées en clair puis codées, ainsi que pour agir sur le processus en fonction du résultat de la comparaison effectuée.

L'invention concerne également une installation pour la mise en oeuvre du procédé ci-dessus, du type comprenant un calculateur, tel qu'une unité centrale ou un terminal, un ensemble de commande tel qu'un clavier, un capteur de mesure, un lecteur de carte et analogues pour l'introduction de données dans le calculateur et un ensemble de présentation en clair de données tel qu'une imprimante associée à un support d'impression, un écran à caractères lumineux et autres, caractérisée en ce qu'elle comprend un capteur optique disposé à proximité de l'ensemble de présentation en clair de données et associé à un ensemble de codage desdites données relié au calculateur, lequel comprend des composants spécifiques à la comparaison de données issues respectivement de l'ensemble de commande et du capteur optique.

Selon d'autres caractéristiques de l'invention :

- les informations étant présentées en clair selon des lignes et l'ensemble de présentation en clair comprenant des moyens par lesquels chaque ligne est déplacée dès sa formation, le capteur optique est disposé à l'aplomb de l'endroit où doit se trouver chaque ligne après avoir été déplacée dès sa formation;

.../...

- l'ensemble de codage du capteur optique comprend une matrice de digitalisation des images des données présentées en clair audit capteur afin de transcrire ces images en données codées destinées au calculateur;

- l'ensemble de codage du capteur optique comprend une mémoire pour conserver sous forme digitalisée au moins une sorte de caractères correspondant à celle(s) utilisée(s) par l'ensemble de présentation en clair.

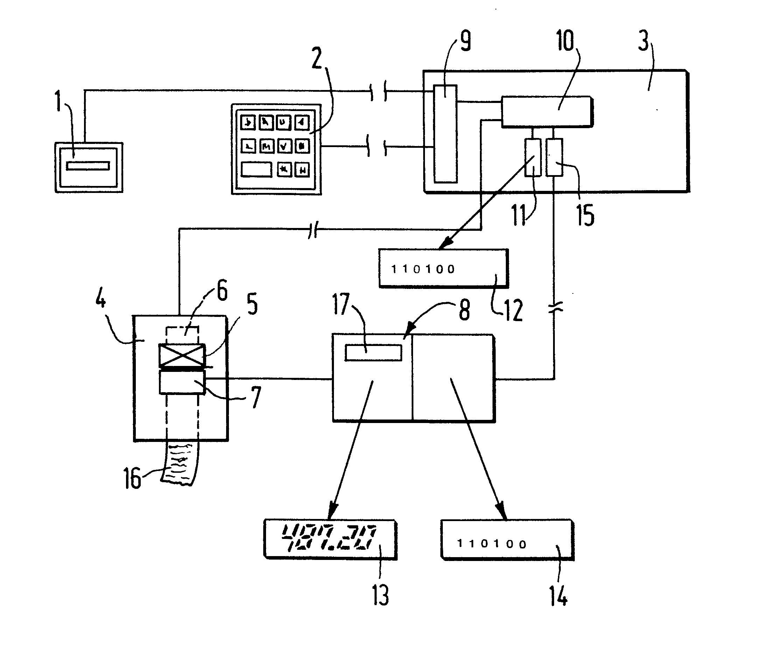

L'invention sera mieux comprise par la description détaillée ci-après faite en référence au dessin annexé. Bien entendu, la description et le dessin ne sont donnés qu'à titre d'exemple indicatif et non limitatif.

La figure unique du dessin est une vue schématique d'une installation conforme à l'invention appliquée à un processus qui est commandé à partir d'un clavier et d'une carte d'identification et qui donne lieu à l'émission d'un ticket imprimé.

En se reportant au dessin, on voit que l'installation comprend un lecteur 1 pour la lecture d'une carte ou "badge" ainsi qu'un clavier 2 reliés l'un et l'autre à un calculateur 3 qui peut être constitué par un ordinateur central situé géographiquement à grande distance de l'endroit où se trouvent le lecteur 1 et le clavier 2, ou un terminal proche de ces derniers.

L'installation comporte également un ensemble 4 pour la présentation en clair de données, cet ensemble étant constitué ici par une imprimante comprenant un bloc d'impression 5 et du papier stocké en bobine 6, guidé et déplacé par des moyens mécaniques connus en soi, ce papier constituant un support d'impression pour le bloc 5.

A proximité immédiate du bloc 5, se trouve un capteur optique 7 relié à un ensemble de codage 8.

Par ailleurs, le calculateur 3 est conçu et programmé comme on va le décrire ci-après pour effectuer une comparaison entre les données qu'il reçoit et les données qu'il fournit à l'imprimante 4.

Pour cela, on a schématisé en 9 la circuiterie qui reçoit les données du lecteur de carte 1 d'une part et du clavier 2 d'autre part et en 10 la circuiterie qui fournit les données à l'imprimante 4. On voit que ces données sont également fournies à un composant 11 sous forme de signaux électriques binaires comme on l'a schématisé dans le rectangle 12.                                   .../...

L'ensemble de codage 8 reçoit les informations du capteur optique 7 et les analyse sous forme digitalisée comme on l'a schématisé dans le rectangle 13. L'ensemble 8 transcode ces informations digitalisées en informations électriques binaires comme on l'a schématisé dans le rectangle 14 et les fournit à un composant 15 lui-même relié à la circuiterie 10.

Le fonctionnement de l'installation qui vient d'être décrite est le suivant :

L'usager accède au calculateur 3 grâce à sa carte d'identification qu'il engage dans le lecteur 1 et commande le fonctionnement du calculateur 3 en agissant sur la clavier 2.

Les données ainsi reçues en 9 sont traitées en 10 et le fonctionnement du calculateur procure un résultat qui est envoyé à l'imprimante 4 ainsi que, simultanément, dans le composant 11 qui est, par exemple, une mémoire de type RAM.

Outre ces données pures, le calculateur 3 est programmé pour commander l'imprimante 4 et le bloc d'impression 5.

Les opérations matérielles consistent à dérouler le papier de la bobine 6, à le maintenir immobile pendant l'action du bloc d'impression 5 et à le déplacer pas à pas dès que le bloc d'impression a imprimé une ligne, afin de présenter toujours à ce dernier une partie vierge.

Le capteur optique 7 est placé de telle manière que la ligne qui vient d'être imprimée soit amenée exactement à l'aplomb des organes de lecture, en sorte que l'image des caractères imprimés est détectée et fournie à l'ensemble 8 qui code cette image au moyen d'une matrice de digitalisation.

L'ensemble de codage 8 traduit ces informations en signaux binaires et les envoie au composant 15 qui, lui aussi, est de préférence constitué par une mémoire de type RAM.

Ainsi, le calculateur 3 est conçu et programmé pour effectuer une comparaison entre les données de la mémoire 11 et les données de la mémoire 15.

Le résultat de la comparaison peut être exploité de différentes manières, la plus simple étant de laisser le processus se poursuivre si la comparaison, ligne par ligne, montre une identité absolue entre les informations de la mémoire 11 et celles de la mémoire 15, tandis que le processus est arrêté dès qu'une différence apparaît entre les données de la mémoire 11 et celles de la mémoire 15. L'arrêt du processus peut, par exemple, se traduire pour l'usager par une mention imprimée sur le papier qu'il reçoit sous forme d'un ticket 16 émis par l'imprimante 4, ou par l'absence de ticket, mais alors il est bon de prévoir un message d'erreur émis à destination de l'utilisateur, notamment par affichage.

Si le processus est entièrement satisfaisant, ligne par ligne, l'usager reçoit un ticket 16 qui porte des mentions correctes et a l'assurance absolue que le calculateur 3 a retenu les mêmes données que celles qui figurent sur le ticket 16.

SI au contraire une anomalie se produit, il n'y a plus identité entre les données de la mémoire 11 et celles de la mémoire 15 mais l'usager est immédiatement averti de cette anomalie et a l'assurance que le calculateur 3 neutralisera l'opération, la mention particulière de son ticket 16 en faisant foi, le cas échéant.

On remarque que le capteur optique 7 est entièrement indépendant des données fournies au caculateur 3 puisqu'il ne recueille que le résultat matériel du fonctionnement de ce calculateur 3, ce résultat matériel étant ici l'image réellement imprimée par le bloc 5.

Naturellement, on comprend que le capteur 7 fonctionne quel que soit le système d'impression et que l'installation n'est donc pas subordonnée à l'adoption d'un système particulier de présentation des données en clair.

Par conséquent, l'installation s'applique aussi bien aux imprimantes qu'aux afficheurs.

L'imprimante peut également être de n'importe quelle espèce connue : à aiguilles, à frappe mécanique, à marguerite, à jet d'encre, de type thermique, etc.

L'afficheur peut lui-même être de type cathodique, à cristaux liquide, à plasma, etc.

Lorsqu'il s'agit d'imprimante, on note que le capteur optique 7 détecte non seulement les données imprimées mais, bien entendu, par contraste, l'absence de données imprimées et par conséquent aucun test supplémentaire n'est nécessaire pour vérifier la présence de papier, le déplacement de la tête d'impression ou du papier lui-même, l'état d'un éventuel ruban encreur, etc.

Avec l'invention, on dispose d'une installation grâce à laquelle on peut garantir de façon absolue que les caractères imprimés ou affichés correspondent exactement aux données qui seront retenues par le calculateur, quel que soit le système choisi pour informer l'usager au moment ou il commande l'opération mettant en oeuvre l'installation.

La prise des informations par le capteur optique 7 se fait, on le remarque, au-delà de la fin du processus électronique et mécanique de l'ensemble de l'installation puisqu'elle se situe, pourrait-on dire, au même endroit que l'oeil de l'observateur.

Cette certitude que les données présentée en clair (caractères affichés ou imprimés) existent, sont lisibles et sont correctes permet de donner au ticket 16 la valeur d'une preuve irréfutable, ce qui est particulièrement important lorsque l'opération consiste en une transaction financière ou, ce qui revient au même, lorsque l'opération met en jeu un paiement décalé dans le temps, tel que cela est pratiqué au moyen de cartes de crédit, notamment avec des appareils prévus pour la distribution automatique et sans surveillance de denrées telles que des carburants pour véhicules.

Afin de reconnaître que les données présentées en clair, c'est-à-dire les caractères de la ligne imprimée par le bloc 5, l'ensemble de codage 8 comprend une mémoire 17 qui conserve la forme digitalisée du jeu de caractères utilisé par l'imprimante 4.

On peut, bien entendu, prévoir que la mémoire 17 comporte plusieurs séries de caractères digitalisés afin de pouvoir s'adapter à différents type d'ensembles de présentation de données en clair : imprimantes à différents caractères, voire interchangeables, écrans à cristaux liquides, etc.

.../...

0157671

Dans la pratique, il peut arriver que les mêmes données soient présentées en clair deux fois de suite. Pour lever tout ambiguïté, on peut ajouter un compteur correspondant à chaque ligne ou encore organiser le capteur optique 7 et l'ensemble de décodage 8 de telle manière que le capteur 7 puisse lire plusieurs lignes à la fois.

Bien entendu, le processus décrit ci-dessus est le même si la preuve irréfutable que l'information est "véritable" doit être constituée par un document comptable tel qu'un journal de fonds associé à la machine, soit en plus du ticket remis à l'usager, soit en remplacement de ce ticket.

***

## REVENDICATIONS

1- Procédé pour assurer la sécurité d'un processus qui met en oeuvre des dispositifs électroniques en garantissant la cohérence voulue entre des données introduites dans un calculateur (3) et des données issues dudit calculateur (3) présentées en clair soit par affichage, soit par impression, caractérisé en ce que d'une part on transfère les données à présenter en clair à un ensemble de commande (4) de la présentation en clair et que simultanément, on les conserve dans une mémoire (11) du calculateur (3) et que, d'autre part, on observe par des moyens optiques (7) les données effectivement présentées en clair, on traduit celles-ci en informations codées et l'on transfère ces dernières au calculateur (3) que l'on a programmé pour effectuer une comparaison entre les données à présenter en clair conservées en mémoire et les données présentées en clair puis codées, ainsi que pour agir sur le processus en fonction du résultat de la comparaison effectuée.

2- Installation pour la mise en oeuvre du procédé selon la revendication 1, du type comprenant un calculateur (3), tel qu'une unité centrale ou un terminal, un ensemble de commande tel qu'un clavier (2), un capteur de mesure, un lecteur de carte (1) et analogues pour l'introduction de données dans le calculateur (3) et un ensemble de présentation en clair de données, tel qu'une imprimante (4) associée à un support d'impression (6), un écran à caractères lumineux et autres, caractérisée en ce qu'elle comprend un capteur optique (7) disposé à proximité de l'ensemble (4) de présentation en clair de données et associé à un ensemble de codage (8) desdites données relié au calculateur (3), lequel comprend des composants (10 -11 - 15) spécifiques à la comparaison de données issues respectivement de l'ensemble de commande (1 - 2) et du capteur optique (7).

3- Installation selon la revendication 2, caractérisé en ce que les informations étant présentées en clair selon des lignes et l'ensemble de présentation en clair (4) comprenant des moyens par lesquels chaque ligne est déplacée dès sa formation, le capteur optique (7) est disposé à l'aplomb de l'endroit où doit se trouver chaque ligne après avoir été déplacée dès sa formation.

.../...

4- Installation selon la revendication 2, caractérisée en ce que l'ensemble de codage (8) du capteur optique (7) comprend une matrice de digitalisation des images des données présentées en clair audit capteur (7), afin de transcrire ces images en données codées destinées au calculateur (3).

5- Installation selon la revendication 4, caractérisée en ce que l'ensemble de codage (8) du capteur optique (7) comprend une mémoire (17) pour conserver sous forme digitalisée au moins une sorte de caractères correspondant à celle(s) utilisée(s) par l'ensemble de présentation en clair (4).

*****

0157671

**Office européen des brevets**

## RAPPORT DE RECHERCHE EUROPEENNE

EP 85 40 0410

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 656 426 (POTTER) <br> * Colonne 10, lignes 38-52 * | 1-3 | G 06 F 11/16 <br> G 07 F 7/10 <br> G 06 K 5/00 |
| | --- | | |
| Y | US-A-3 631 396 (SPERTUS) <br> * Colonne 4, lignes 20-37 * | 1-3 | |
| | --- | | |
| A | US-A-3 794 818 (KENNEDY) <br> * Colonne 3, lignes 44-52 * | 1 | |
| | ----- | | |

DOMAINES TECHNIQUES RECHERCHES (Int. Cl.4)

G 06 F 11/00
G 06 F 11/16
G 07 F 7/10
G 06 K 5/02
G 06 K 15/00

Le present rapport de recherche a été établi pour toutes les revendications

| Lieu de la recherche | Date d'achèvement de la recherche | Examinateur |
|---|---|---|
| LA HAYE | 04-06-1985 | GUIVOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82